# EUROPÄISCHE PATENTSCHRIFT

(11) **EP 0 879 984 B1**
(45) Veröffentlichungstag und Bekanntmachung des Hinweises auf die Patenterteilung: **21.12.2005**
(21) Anmeldenummer: 98105197.2
(22) Anmeldetag: 23.03.1998
(51) Int. Cl.: F16L 33/207, B60T 17/04

(54) **Anschlussarmatur für Schläuche**
Connecting device for hoses
Dispositif de raccordement pour tuyaux souples

(30) Priorität: 13.05.1997 DE 29708422 U
(43) Veröffentlichungstag der Anmeldung: 25.11.1998
(73) Patentinhaber: FTE automotive GmbH, 96106 Ebern (DE)
(72) Erfinder: Redai, Karl, Dipl.-Ing., 96106 Ebern (DE)
(74) Vertreter: Oppermann, Mark

(56) Entgegenhaltungen:
- FR-A- 1 014 618
- FR-A- 2 615 266
- US-A- 2 024 507

## Beschreibung

Die Erfindung bezieht sich auf eine Anschlußarmatur für Schläuche gemäß dem Oberbegriff des Patentanspruchs 1. Insbesondere bezieht sich die Erfindung auf eine Anschlußarmatur für Bremsschläuche nach der SAE-Spezifikation J 1401.

In der Kraftfahrzeugtechnik finden derartige Bremsschläuche als sogenannte ZSB-Bremsschläuche massenweise Anwendung. Ein ZSB-Bremsschlauch besteht aus einem Bremsschlauchabschnitt mit daran angebrachten metallischen Anschlußarmaturen und wird als vormontiertes Teil vornehmlich an die Kraftfahrzeugindustrie geliefert, wo er in die jeweilige hydraulische Bremsanlage eingebaut wird.

Aus beispielsweise dem deutschen Gebrauchsmuster DE-U-1 709 160 ist eine Anschlußarmatur für solche Bremsschläuche bekannt, bei der in das Ende des Bremsschlauchs ein hohlzylindrischer Rohrnippel eingedrückt ist, der von einem Hülsenteil der Anschlußarmatur konzentrisch umgeben wird. Die Befestigung der Anschlußarmatur am Bremsschlauch erfolgt durch radiales bzw. axiales Verpressen des Hülsenteils, wobei das Ende des Bremsschlauchs zwischen dem Hülsenteil und dem starren Rohrnippel hydraulisch dicht eingeklemmt wird. Derartige Verbindungen sind geeignet, hohen hydraulischen Drücken zu widerstehen.

Um die Festigkeit bzw. Dichtigkeit dieser Verbindung noch zu erhöhen, wurde gemäß beispielsweise dem gattungsbildenden deutschen Gebrauchsmuster DE-U-1 886 366 vorgeschlagen, den Rohrnippel am Außenumfang mit mindestens einer spanend eingebrachten Ringnut zu versehen, so daß nach Verpressen des Hülsenteils das über den Rohrnippel elastisch aufgeweitete Schlauchende sowohl am Hülsenteil als auch am Rohrnippel mittels Formschluß gehalten wird. Weiterhin wird gemäß diesem Stand der Technik vorgeschlagen, den Rohrnippel derart auszubilden, daß er sich zu seinem freien Ende hin konisch verjüngt, so daß im montierten Zustand der Anschlußarmatur das Material des Schlauchendes sich in Richtung des freien Endes allmählich von seinem gepreßten Zustand in den nicht gepreßten Zustand erweitern kann.

Zwar wird somit eine hohe Dichtigkeit der Verbindung dauerhaft gewährleistet, jedoch hat dieser Stand der Technik Handhabungsnachteile. Wirtschaftliche Erfordernisse haben für Großserien nämlich eine Automatisierung der Montage von Bremsschläuchen erforderlich gemacht, wobei sich das Aufschieben der abgelängten Bremsschlauchabschnitte auf den Rohrnippel der Anschlußarmatur im Fertigungsablauf als problematisch herausstellte. Üblicherweise wird der Bremsschlauch als Meterware auf Coil gefertigt und auf diese Weise auch platzsparend bis zur Weiterverarbeitung, dem Ablängen, gelagert. Dadurch weisen die abgelängten Bremsschlauchabschnitte in Abhängigkeit von der Gewebeanzahl in der Schlauchwandung, dem verwendeten Elastomer und dessen Dicke an Seele und Decke eine mehr oder weniger starke Krümmung auf, was das automatische Fügen und Aufschieben der relativ steifen abgelängten Bremsschlauchabschnitte auf den Rohrnippel der Anschlußarmatur erschwert. Hinzu kommt, daß neue Techniken für die Verbindung von Rohrnippel und Anschlußarmatur zur Anwendung gelangen, beispielsweise das Taumelnieten von trompetenförmigen Rohrnippeln, was nur mit größeren Toleranzen, d.h. mit gewissem Achsversatz zwischen der Mittelachse des Rohrnippels und der Mittelachse der Anschlußarmatur bzw. des Hülsenteils wirtschaftlich realisierbar ist.

Schließlich sind auch den Druckschriften FR-A-2 615 266 und US-A-2 024 507 Anschlußarmaturen für Schläuche zu entnehmen, mit jeweils einem Rohrnippel, der von einem Hülsenteil umgeben ist, wobei im am Schlauch montierten Zustand der Anschlußarmatur der über ein freies Ende des Rohrnippels aufgeschobene Schlauch mit dem Rohrnippel mittels des Hülsenteils verpreßt ist. Bei den hier offenbarten Anschlußarmaturen hat der Rohrnippel am freien, einen konstanten Innendurchmesser aufweisenden Ende außenumfangsseitig einen Ringwulst, wie er prinzipiell schon aus dem gattungsbildenden deutschen Gebrauchsmuster DE-U-1 886 366 zur Aufnahme von Axialkräften bekannt ist.

Gegenüber dem oben beschriebenen Stand der Technik liegt der Erfindung die Aufgabe zugrunde, eine möglichst kostengünstige Anschlußarmatur für Schläuche zu schaffen, die sich einfach und somit wirtschaftlich günstig am Schlauch montieren läßt.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 8.

Erfindungsgemäß hat der Rohrnippel einer Anschlußarmatur für Schläuche, bei der im am Schlauch montierten Zustand der über ein freies Ende des Rohrnippels aufgeschobene Schlauch mit dem Rohrnippel mittels eines den Rohrnippel umgebenden Hülsenteils verpreßt ist, am freien Ende eine durch Kaltverformung ausgebildete Aufweitung, die auf ihrer von der Anschlußarmatur weggewandten Seite kugelkalottenförmig ausgebildet ist.

Somit kann bei Montage der Anschlußarmatur am Schlauch der abgelängte Schlauchabschnitt ohne Probleme auf den Rohrnippel aufgeschoben werden, wobei sich infolge der kugelkalottenförmigen Aufweitung des Rohrnippels der Rohrnippel auch bei Achs- bzw. Winkelversatz zwischen der Mittelachse des Rohrnippels und der Mittelachse der Anschlußarmatur bzw. des Hülsenteils quasi von selbst in den Schlauchabschnitt einfädelt. Da das freie Ende des Rohrnippels kugelkalottenförmig aufgeweitet ist, wird der Einfädelvorgang durch keinerlei Kante behindert, wobei sich auch die Aufschiebekraft in Verbindung mit den üblichen Hilfsmitteln, wie Fett, Montageflüssigkeit etc., in Grenzen hält. Zudem bedarf es unter Beibehaltung der bewährten Montageanlagen und -werkzeuge in vorteilhafter Weise keiner aufwendigen Sensortechnik zur Überprüfung der Relativlage von abgelängtem Schlauchabschnitt und Rohrnippel. Die erfindungsgemäße Aufweitung läßt sich darüber hinaus auch an sehr kleinen und/oder dünnwandigen Rohrnippeln kostengünstig mittels Kaltverformung des Rohrnippels ausbilden. Schließlich erhöht die Aufweitung noch vorteilhaft die Festigkeit und Dichtigkeit der Verbindung zwischen Schlaucharmatur und Schlauch, weil der Schlauch nach Verpressen des Hülsenteils mit Formschluß an der Aufweitung anliegt. Im Ergebnis ist durch die erfindungsgemäße Ausbildung der Anschlußarmatur bei geringen Kosten eine automatische Montage der Anschlußarmatur am Schlauch ohne Störungen möglich.

Gemäß dem Patentanspruch 2 geht die Aufweitung ausgehend von ihrem kugelkalottenförmigen Abschnitt über einen sich im wesentlichen konisch verjüngenden Abschnitt stufenlos in einen zylindrischen Abschnitt des Rohrnippels über. Somit weist der Rohrnippel über seine Länge vorteilhaft keinerlei Kante auf, die im eingebauten Zustand der Anschlußarmatur, d.h. unter Druckbeaufschlagung, auf Dauer Dichtigkeitsprobleme mit sich bringen könnte. Dabei geht der im wesentlichen konische Abschnitt des Rohrnippels vorzugsweise mit einem Übergangsradius in den zylindrischen Abschnitt des Rohrnippels über, wobei der Übergangsradius größer gleich dem Innendurchmesser des zylindrischen Abschnitts des Rohrnippels ist, wie im Patentanspruch 3 angegeben.

Nach der technischen Lehre des Patentanspruchs 4 ist der im wesentlichen konische Abschnitt des Rohrnippels in axialer Richtung der Anschlußarmatur zweckmäßig etwa doppelt so lang wie der kugelkalottenförmige Abschnitt des Rohrnippels.

Als besonders vorteilhaft im Hinblick auf die funktionellen Anforderungen an die Anschlußarmatur, d.h. insbesondere hinsichtlich Festigkeit und Dichtigkeit der Verbindung, hat sich die Ausbildung der Anschlußarmatur nach dem Patentanspruch 5 herausgestellt, gemäß dem der maximale Außendurchmesser der Aufweitung um 15 bis 20 % größer ist als der Außendurchmesser des zylindrischen Abschnitts des Rohrnippels.

Gemäß dem Patentanspruch 6 entspricht der maximale Außendurchmesser der Aufweitung etwa dem Innendurchmesser des Schlauchs, wodurch lediglich geringe Kräfte notwendig sind, um den abgelängten Schlauchabschnitt auf den Rohrnippel aufzuschieben.

Weiterhin sieht der Patentanspruch 7 vor, daß der Innendurchmesser der Durchgangsöffnung der Aufweitung am freien Ende des Rohrnippels kleiner ist als der Innendurchmesser des zylindrischen Abschnitts des Rohrnippels. Somit fädelt sich der Rohrnippel während der Montage der Anschlußarmatur am Schlauch selbst bei schlechter Ausfluchtung von Rohrnippel und Schlauchabschnitt, d.h. relativ großem Achsversatz zwischen der Mittelachse des Rohrnippels und der Mittelachse des Schlauchabschnitts, leicht in den Schlauchabschnitt ein.

Schließlich steht nach der technischen Lehre des Patentanspruchs 8 das einstückig mit der Anschlußarmatur ausgebildete Hülsenteil über das freie Ende des Rohrnippels hinaus vor. Dies hat zum einen den Vorteil, daß der Schlauch bei Montage der Anschlußarmatur mittels des Hülsenteils an seinem Außenumfang vorzentriert wird, bevor er den Rohrnippel erreicht. Zum anderen genügt die bei dieser Ausbildung unmittelbar am Schlauch montierte Anschlußarmatur auch hohen Sicherheitsanforderungen, wie sie beispielsweise durch die SAE-Spezifikation J 1401 für hydraulische Bremsschläuche vorgegeben sind.

Die Erfindung wird nachstehend anhand eines bevorzugten Ausführungsbeispiels unter Bezugnahme auf die Zeichnung näher erläutert. Dabei zeigen:
Die Fig. 1 eine Schnittansicht einer erfindungsgemäßen Anschlußarmatur, die an einem aufgebrochen dargestellten Schlauchabschnitt zu befestigen ist, und
die Fig. 2 eine vergrößerte Darstellung der Aufweitung am freien Ende des Rohrnippels der Anschlußarmatur gemäß Fig. 1.

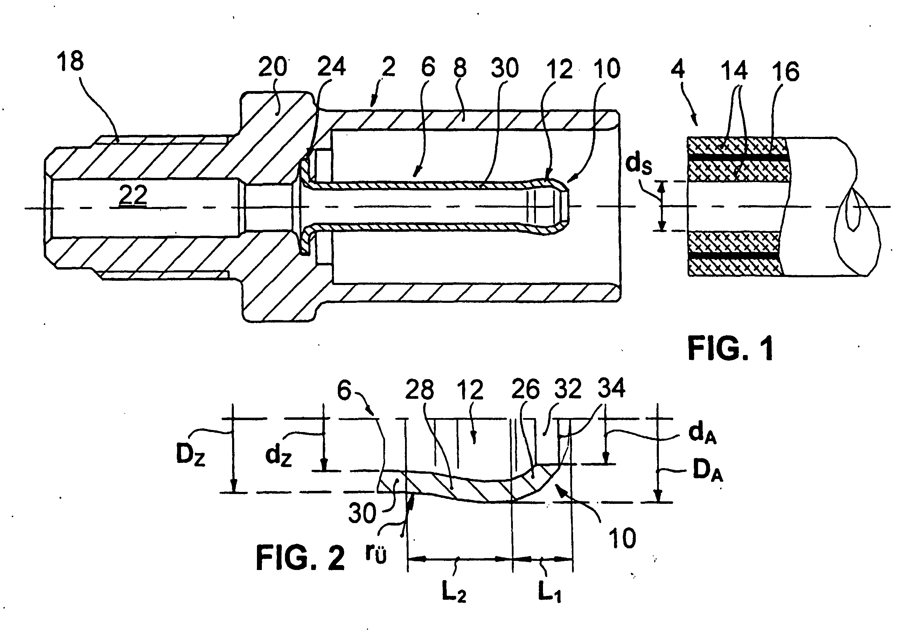

Die Fig. 1 zeigt eine Anschlußarmatur 2 und einen Schlauchabschnitt 4 im nicht montierten Zustand. Die metallische Anschlußarmatur 2 hat einen Rohrnippel 6, der von einem im wesentlichen konzentrischen Hülsenteil 8 umgeben ist. Im am Schlauchabschnitt 4 montierten Zustand der Anschlußarmatur 2 ist der über ein freies Ende 10 des Rohrnippels 6 aufgeschobene Schlauchabschnitt 4 an dem Rohrnippel 6 in an sich bekannter Weise durch radiales bzw. axiales Verpressen des Hülsenteils 8 befestigt. Der Rohrnippel 6 weist an seinem freien Ende 10 eine durch Kaltverformung ausgebildete Aufweitung 12 auf, die auf ihrer von der Anschlußarmatur 2 abgewandten Seite kugelkalottenförmig ausgebildet ist und im folgenden unter Bezugnahme auf die Fig. 2 noch näher beschrieben wird.

Der in Fig. 1 auf der rechten Seite aufgebrochen dargestellte Schlauchabschnitt 4 weist konzentrische Gummischichten 14 auf, die mittels einer Stoffschicht 16 verstärkt sind, wie dies bei Bremsschläuchen üblich ist. Der Innendurchmesser d_{S} des Schlauchabschnitts 4 beträgt nach der eingangs zitierten SAE-Spezifikation J 1401 3,175 mm (1/8") bzw. 4,763 mm (3/16"). Der Einfachheit halber ist in Fig. 1 lediglich das linke Ende des Schlauchabschnitts 4 dargestellt. Bei den erwähnten ZSB-Bremsschläuchen sind beide Enden des Schlauchabschnitts 4 mit jeweils einer Anschlußarmatur 2 versehen, die dem Anschluß des ZSB-Bremsschlauchs an anderen Teilen einer Kraftfahrzeug-Bremsanlage dienen.

Die Anschlußarmatur 2 hat an ihrem in Fig. 1 linken Ende ein Gewindeteil 18 zur Befestigung an den anderen Teilen der Kraftfahrzeug-Bremsanlage. Das Gewindeteil 18 ist einstückig mit einem Hauptteil 20 ausgebildet, welches auf der in Fig. 1 rechten Seite der Anschlußarmatur 2 in das Hülsenteil 8 übergeht. Das Hauptteil 20 kann an seinem Außenumfang mit einem Handhabungsprofil, wie einem Außensechskant, versehen sein, so daß der ZSB-Bremsschlauch mit den anderen Teilen der Kraftfahrzeug-Bremsanlage problemlos verschraubt werden kann. Das Hülsenteil 8 ist hinsichtlich Wandstärke und Innendurchmesser derart dimensioniert, daß es den Schlauchabschnitt 4 aufnehmen und mit diesem zusammen in an sich bekannter Weise axial bzw. radial verpreßt werden kann. Zu betonen ist noch, daß das Hülsenteil 8 einstückig mit dem Hauptteil 20 ausgebildet ist, so daß der Schlauchabschnitt 4 im montierten Zustand nach Verpressen des Hülsenteils 8 direkt bzw. unmittelbar mit der Anschlußarmatur 2 verbunden ist, was hohen Sicherheitsanforderungen genügt.

Durch das Gewindeteil 18 und das Hauptteil 20 der Anschlußarmatur 2 hindurch erstreckt sich eine in Achsrichtung der Anschlußarmatur 2 verlaufende Durchgangsbohrung 22. Die Durchgangsbohrung 22 weist an ihrem in Fig. 1 rechten Ende einen Aufnahmeabschnitt 24 auf, der der Aufnahme und Befestigung des vom Hülsenteil 8 konzentrisch umgebenen Rohrnippels 6 dient. Der vorzugsweise tiefgezogene Rohrnippel 6 ist im dargestellten Ausführungsbeispiel mittels Taumelnieten mit dem Hauptteil 20 der Anschlußarmatur 2 verbunden. Gleichermaßen kann der Rohrnippel 6 jedoch auch in das Hauptteil 20 eingelötet oder mit dem Hauptteil 20 verstemmt sein. Ebenfalls ist es denkbar, daß der Rohrnippel 6 einstückig mit dem Hauptteil 20 ausgebildet ist.

Der Rohrnippel 6 erstreckt sich ausgehend vom Hauptteil 20 beinahe über die gesamte Länge des Hülsenteils 8 der Anschlußarmatur 2, wobei sein freies Ende 10 nicht über das Hülsenteil 8 hinaus vorsteht, und taucht im am Schlauchabschnitt 4 montierten Zustand der Anschlußarmatur 2 in den Schlauchabschnitt 4 ein. Der starre Rohrnippel 6 dient beim Verpressen des Hülsenteils 8 mit dem Schlauchabschnitt 4 als Widerlager. Im am Schlauchabschnitt 4 montierten Zustand der Anschlußarmatur 2 ist der Schlauchabschnitt 4 somit zwischen dem Rohrnippel 6 und dem plastisch verformten Hülsenteil 8 hydraulisch dicht eingeklemmt, wobei der Schlauchabschnitt 4 aufgrund seiner elastischen Verformung kraftschlüssig und infolge der Aufweitung 12 des Rohrnippels 6 sowie der plastischen Verformung des Hülsenteils 8 formschlüssig an der Anschlußarmatur 2 unlösbar festgelegt ist.

Bezüglich weiterer wesentlicher Merkmale von ZSB-Bremsschläuchen kann ansonsten auf die SAE-Spezifikation J 1401 verwiesen werden.

In der Fig. 2 ist die Aufweitung 12 am freien Ende 10 des Rohrnippels 6 vergrößert dargestellt. Um den Schlauchabschnitt 4 bei automatisierter Montage von ZSB-Bremsschläuchen sicher und ohne Störungen auf den Rohrnippel 6 aufschieben zu können, weist die Aufweitung 12 an ihrem vom Hauptteil 20 abgewandten, in Fig. 1 rechten Ende einen Abschnitt 26 auf, dessen Außenumfangsfläche kugelkalottenförmig ausgebildet ist. Die Länge des kugelkalottenförmigen Abschnitts 26, der unmittelbar am Ende des Rohrnippels 6 beginnt, ist in Fig. 2 mit L₁ bezeichnet.

Ausgehend vom in Fig. 2 rechten Ende des Rohrnippels 6 schließt sich an den kugelkalottenförmigen Abschnitt 26 stufenlos ein Abschnitt 28 an, dessen Außenumfangsfläche sich in Richtung des Hauptteil 20 im wesentlichen konisch verjüngt und an dem in axialer Richtung der Anschlußarmatur 2 gesehen das Hülsenteil 8 verpreßt wird. Die Länge des im wesentlichen konischen Abschnitts 28 ist in Fig. 2 mit L₂ bezeichnet und beträgt etwa das Doppelte der Länge L₁ des kugelkalottenförmigen Abschnitts 26. Im Ergebnis ist die aus dem kugelkalottenförmigen Abschnitt 26 und dem im wesentlichen konischen Abschnitt 28 bestehende Aufweitung 12 des Rohrnippels 6 in axialer Richtung der Anschlußarmatur 2 unsymmetrisch ausgebildet.

Der im wesentlichen konische Abschnitt 28 geht in Richtung des Hauptteils 20 stufenlos in einen zylindrischen Abschnitt 30 des Rohrnippels 6 über, wobei der Übergang zwischen dem im wesentlichen konischen Abschnitt 28 und dem zylindrischen Abschnitt 30 mit einem Übergangsradius r_{U} ausgeführt ist, der vorzugsweise größer oder gleich dem Innendurchmesser d_{Z} des zylindrischen Abschnitts 30 des Rohrnippels 6 ist. Durch die gewählte Länge L₂ des im wesentlichen konischen Abschnitts 28 und dessen sanften Übergang in den zylindrischen Abschnitt 30 wird bei Montage der Anschlußarmatur 2 eine sichere Plazierung der Quetschstelle des Hülsenteils 8 gewährleistet, wobei das Werkzeug der Einzugsmaschine die Einzugsstelle auch bei toleranzbehafteten Fügeteilen nicht auf die Aufweitung 12 oder den zylindrischen Abschnitt 30 setzen kann.

Der kugelkalottenförmige Abschnitt 26 wird auf der in Fig. 2 rechten Seite des freien Endes 10 des Rohrnippels 6 von einer zylindrischen Durchgangsöffnung 32 durchsetzt, so daß sich an der in Fig. 2 rechten Stirnfläche des Rohrnippels 6 eine Abplattung 34 ergibt. Der Innendurchmesser d_{A} der Durchgangsöffnung 32 der Aufweitung 12 ist kleiner als der Innendurchmesser d_{Z} des zylindrischen Abschnitts 30 des Rohrnippels 6. Um den Erfordernissen der SAE-Spezifikation J 1401 zu genügen, muß der Innendurchmesser d_{A} der Durchgangsöffnung 32 jedoch größer als 2,032 mm (0,08") sein.

Der maximale Außendurchmesser D_{A} der Aufweitung 12 ist um 15 bis 20 % größer als der Außendurchmesser D_{Z} des zylindrischen Abschnitts 30 des Rohrnippels 6. Innerhalb dieses Bereichs kann die Aufweitung 12 gut mittels Kaltverformung ausgebildet werden. Zudem wird so der Schlauchabschnitt 4 mittels Formschluß sicher an der Aufweitung 12 gehalten. Weiterhin entspricht der maximale Außendurchmesser D_{A} der Aufweitung 12 dem Innendurchmesser d_{S} des Schlauchabschnitts 4, so daß beim Fügen der Anschlußarmatur 2 an den Schlauchabschnitt 4 eine Aufweitung des Schlauchabschnitts 4 vermieden wird und das Einfädeln des Rohrnippels 6 in den Schlauchabschnitt 4 ohne erhöhte Montagekräfte erfolgen kann.

Es wird eine Anschlußarmatur für Schläuche, insbesondere für hydraulische Bremsschläuche in Kraftfahrzeug-Bremsanlagen offenbart, die einen Rohrnippel hat, der von einem Hülsenteil umgeben ist, wobei im am Schlauch montierten Zustand der Anschlußarmatur der über ein freies Ende des Rohrnippels aufgeschobene Schlauch mit dem Rohrnippel mittels des Hülsenteils verpreßt ist. Erfindungsgemäß weist der Rohrnippel am freien Ende eine durch Kaltverformung ausgebildete Aufweitung auf, die auf ihrer von der Anschlußarmatur abgewandten Seite kugelkalottenförmig ausgebildet ist, wodurch u.a. eine einfache und bei Automatisierung wirtschaftlich günstige Montage der Anschlußarmatur am Schlauch gewährleistet werden kann.

### Bezugszeichenliste

- 2: Anschlußarmatur
- 4: Schlauchabschnitt
- 6: Rohrnippel
- 8: Hülsenteil
- 10: freies Ende
- 12: Aufweitung
- 14: Gummischicht
- 16: Stoffschicht
- 18: Gewindeteil
- 20: Hauptteil
- 22: Durchgangsbohrung
- 24: Aufnahmeabschnitt
- 26: kugelkalottenförmiger Abschnitt
- 28: konischer Abschnitt
- 30: zylindrischer Abschnitt
- 32: zylindrische Durchgangsöffnung
- 34: Abplattung

- r_{U}: Übergangsradius zwischen dem konischen Abschnitt und dem zylindrischen Abschnitt der Aufweitung des Rohrnippels
- d_{A}: Innendurchmesser der Durchgangsöffnung der Aufweitung
- d_{Z}: Innendurchmesser des zylindrischen Abschnitts des Rohrnippels
- d_{S}: Innendurchmesser des Schlauchs
- D_{A}: Außendurchmesser der Aufweitung
- D_{Z}: Außendurchmesser des zylindrischen Abschnitts des Rohrnippels
- L₁: Länge des kugelkalottenförmigen Abschnitts
- L₂: Länge des konischen Abschnitts

## Patentansprüche

1. Anschlußarmatur (2) für Schläuche (4), insbesondere für Bremsschläuche in hydraulischen Kraftfahrzeug-Bremsanlagen, mit einem Rohrnippel (6), der von einem Hülsenteil (8) umgeben ist, wobei im am Schlauch (4) montierten Zustand der Anschlußarmatur (2) der über ein freies Ende (10) des Rohrnippels (6) aufgeschobene Schlauch (4) mit dem Rohrnippel (6) mittels des Hülsenteils (8) verpreßt ist, **dadurch gekennzeichnet, daß** der Rohrnippel (6) am freien Ende (10) eine durch Kaltverformung ausgebildete Aufweitung (12) aufweist, die auf ihrer von der Anschlußarmatur (2) abgewandten Seite kugelkalottenförmig ausgebildet ist.

2. Anschlußarmatur (2) nach Anspruch 1, **dadurch gekennzeichnet, daß** die Aufweitung (12) ausgehend von ihrem kugelkalottenförmigen Abschnitt (26) über einen sich im wesentlichen konisch verjüngenden Abschnitt (28) stufenlos in einen zylindrischen Abschnitt (30) des Rohrnippels (6) übergeht.

3. Anschlußarmatur (2) nach Anspruch 2, **dadurch gekennzeichnet, daß** der im wesentlichen konische Abschnitt (28) des Rohrnippels (6) mit einem Übergangsradius (r_{U}) in den zylindrischen Abschnitt (30) des Rohrnippels (6) übergeht, wobei der Übergangsradius (r_{U}) größer gleich dem Innendurchmesser (d_{Z}) des zylindrischen Abschnitts (30) des Rohrnippels (6) ist.

4. Anschlußarmatur (2) nach Anspruch 2 oder 3, **dadurch gekennzeichnet, daß** der im wesentlichen konische Abschnitt (28) des Rohrnippels (6) in axialer Richtung der Anschlußarmatur (2) etwa doppelt so lang ist wie der kugelkalottenförmige Abschnitt (26) des Rohrnippels (6).

5. Anschlußarmatur (2) nach einem der vorhergehenden Ansprüche, **dadurch gekennzeichnet, daß** der maximale Außendurchmesser (D_{A}) der Aufweitung (12) um 15 bis 20 % größer ist als der Außendurchmesser (D_{Z}) des zylindrischen Abschnitts (30) des Rohrnippels (6).

6. Anschlußarmatur (2) nach einem der vorhergehenden Ansprüche, **dadurch gekennzeichnet, daß** der maximale Außendurchmesser (D_{A}) der Aufweitung (12) etwa dem Innendurchmesser (d_{S}) des Schlauchs (4) entspricht.

7. Anschlußarmatur (2) nach einem der vorhergehenden Ansprüche, **dadurch gekennzeichnet, daß** der Innendurchmesser (d_{A}) der Durchgangsöffnung (32) der Aufweitung (12) am freien Ende (10) des Rohrnippels (6) kleiner ist als der Innendurchmesser (d_{Z}) des zylindrischen Abschnitts (30) des Rohrnippels (6).

8. Anschlußarmatur (2) nach einem der vorhergehenden Ansprüche, **dadurch gekennzeichnet, daß** das einstückig mit der Anschlußarmatur (2) ausgebildete Hülsenteil (8) über das freie Ende (10) des Rohrnippels (6) hinaus vorsteht.

## Claims

1. Connecting device (2) for hoses (4), in particular for brake hoses in hydraulic motor vehicle brake systems, with a pipe nipple (6) which is surrounded by a sleeve part (8), wherein, when the connecting device (2) is in the installed state on the hose (4), the hose (4) which is pushed over a free end (10) of the pipe nipple (6) is pressed against the pipe nipple (6) by means of the sleeve part (8), **characterised in that** the pipe nipple (6) has at its free end (10) a widened portion (12) which is formed by cold deformation, said widened portion being designed in a spherical cap-like manner on its side which faces away from the connecting device (2).

2. Connecting device (2) according to Claim 1, **characterised in that** the widened portion (12), starting from its spherical cap-like section (26), merges steplessly into a cylindrical section (30) of the pipe nipple (6) via a section (28) which tapers essentially conically.

3. Connecting device (2) according to Claim 2, **characterised in that** the essentially conical section (28) of the pipe nipple (6) merges into the cylindrical section (30) of the pipe nipple (6) with a transition radius (r_{U}), wherein the transition radius (r_{U}) is greater than or equal to the internal diameter (d_{Z}) of the cylindrical section (30) of the pipe nipple (6).

4. Connecting device (2) according to Claim 2 or 3, **characterised in that** the essentially conical section (28) of the pipe nipple (6) in the axial direction of the connecting device (2) is approximately twice as long as the spherical cap-like section (26) of the pipe nipple (6).

5. Connecting device (2) according to any of the preceding claims, **characterised in that** the maximum external diameter (D_{A}) of the widened portion (12) is 15 to 20% greater than the external diameter (D_{Z}) of the cylindrical section (30) of the pipe nipple (6).

6. Connecting device (2) according to any of the preceding claims, **characterised in that** the maximum external diameter (D_{A}) of the widened portion (12) corresponds approximately to the internal diameter (d_{S}) of the hose (4).

7. Connecting device (2) according to any of the preceding claims, **characterised in that** the internal diameter (d_{A}) of the through-opening (32) in the widened portion (12) at the free end (10) of the pipe nipple (6) is smaller than the internal diameter (d_{Z}) of the cylindrical section (30) of the pipe nipple (6).

8. Connecting device (2) according to any of the preceding claims, **characterised in that** the sleeve part (8), which is made in one piece with the connecting device (2), protrudes beyond the free end (10) of the pipe nipple (6).

## Revendications

1. Raccord de branchement (2) pour tuyaux souples, (4), notamment tuyaux souples de freins dans des installations de freinage hydrauliques de véhicules automobiles, comprenant un embout tubulaire mâle (6) qui est entouré par une pièce de manchon (8), le tuyau souple (4) emmanché par-dessus une extrémité libre (10) de l'embout tubulaire mâle (6) étant, dans l'état monté du raccord de branchement (2) sur le tuyau souple (4), serré par compression avec l'embout tubulaire mâle (6) au moyen de la pièce de manchon (8),
**caractérisé en ce que** l'embout tubulaire mâle (6) présente à l'extrémité libre (10), un évasement (12) obtenu par formage à froid et qui est de configuration en forme de calotte sphérique sur le côté éloigné du raccord de branchement (2).

2. Raccord de branchement (2) selon la revendication 1, **caractérisé en ce que** l'évasement (12), à partir de son tronçon en forme de calotte sphérique (26), se raccorde de manière continue, par l'intermédiaire d'un tronçon (28) se rétrécissant sensiblement de manière conique, à un tronçon cylindrique (30) de l'embout tubulaire mâle (6).

3. Raccord de branchement (2) selon la revendication 2, **caractérisé en ce que** le tronçon sensiblement conique (28) de l'embout tubulaire mâle (6) se raccorde par un rayon de raccordement (r_{ü}) au tronçon cylindrique (30) de l'embout tubulaire mâle (6), le rayon de raccordement (r_{ü}) étant supérieur ou égal au diamètre intérieur (d₂) du tronçon cylindrique (30) de l'embout tubulaire mâle (6).

4. Raccord de branchement (2) selon la revendication 2 ou 3, **caractérisé en ce que** le tronçon sensiblement conique (28) de l'embout tubulaire mâle (6) est, dans la direction axiale du raccord de branchement (2), environ d'une longueur double de celle du tronçon en forme de calotte sphérique (26) de l'embout tubulaire mâle (6).

5. Raccord de branchement (2) selon l'une des revendications précédentes, **caractérisé en ce que** le diamètre extérieur maximal (D_{A}) de l'évasement (12) est plus grand de 15 à 20% que le diamètre extérieur (D_{Z}) du tronçon cylindrique (30) de l'embout tubulaire mâle (6).

6. Raccord de branchement (2) selon l'une des revendications précédentes, **caractérisé en ce que** le diamètre extérieur maximal (D_{A}) de l'évasement (12) correspond environ au diamètre intérieur (d_{S}) du tuyau souple (4).

7. Raccord de branchement (2) selon l'une des revendications précédentes, **caractérisé en ce que** le diamètre intérieur (d_{A}) de l'ouverture de passage (32) de l'évasement (12) à l'extrémité libre (10) de l'embout tubulaire mâle (6), est inférieur au diamètre intérieur (d_{Z}) du tronçon cylindrique (30) de l'embout tubulaire mâle (6).

8. Raccord de branchement (2) selon l'une des revendications précédentes, **caractérisé en ce que** la pièce de manchon (8) réalisée d'un seul tenant avec le raccord de branchement (2) dépasse au-delà de l'extrémité libre (10) de l'embout tubulaire mâle (6).
